Europäisches Patentamt

European Patent Office

Office européen des brevets

(19)

(11) **EP 1 370 020 B1**

(12) **FASCICULE DE BREVET EUROPEEN**

(45) Date de publication et mention
de la délivrance du brevet:
**28.09.2005 Bulletin 2005/39**

(51) Int Cl.$^7$: **H04L 1/00**

(21) Numéro de dépôt: **03291248.7**

(22) Date de dépôt: **26.05.2003**

(54) **Procédé et unité de contrôle d'adaptation de liens radio**

Verfahren und Steuereinheit zur Funkverbindungsanpassung

Method and control unit for radio link adaptation

(84) Etats contractants désignés:
**AT BE BG CH CY CZ DE DK EE ES FI FR GB GR
HU IE IT LI LU MC NL PT RO SE SI SK TR**

(30) Priorité: **03.06.2002 FR 0206786**

(43) Date de publication de la demande:
**10.12.2003 Bulletin 2003/50**

(73) Titulaire: **Nortel Networks Limited
St.Laurent, Quebec H4S 2A9 (CA)**

(72) Inventeurs:
• **Ben Rached, Nidham
75017 Paris (FR)**
• **Cayla, Stéphane
78220 Viroflay (FR)**

(74) Mandataire: **Loisel, Bertrand
Cabinet Plasseraud
65/67 rue de la Victoire
75440 Paris Cedex 09 (FR)**

(56) Documents cités:
  **US-A- 5 699 365          US-A- 6 167 031**

• **JOSE P ET AL: "Performance of link adaptation
in GPRS networks" VEHICULAR TECHNOLOGY
CONFERENCE FALL 2000. IEEE VTS FALL
VTC2000, XP010525437**
• **QUESETH O ET AL: "Algogrithms for link
adaptation in GPRS" VEHICULAR
TECHNOLOGY CONFERENCE, 1999 IEEE 49TH
HOUSTON, TX, USA 16-20 MAY 1999,
PISCATAWAY, NJ, USA,IEEE, US, 16 mai 1999
(1999-05-16), pages 943-947, XP010342055
ISBN: 0-7803-5565-2**
• **VISWANATHAN H ET AL: "Adaptive coded
modulation over slow frequency-selective
fading channels" VEHICULAR TECHNOLOGY
CONFERENCE, 1999 IEEE 49TH HOUSTON, TX,
USA 16-20 MAY 1999, PISCATAWAY, NJ,
USA,IEEE, US, 16 mai 1999 (1999-05-16), pages
2388-2392, XP010342257 ISBN: 0-7803-5565-2**

**EP 1 370 020 B1**

**Description**

La présente invention concerne l'adaptation de liens radio entre des stations de base et des stations mobiles, dans des systèmes de radiocommunication offrant plusieurs niveaux de protection des données échangées. Elle concerne plus particulièrement le choix et l'activation d'un codage et/ou d'une modulation pour de tels liens.

Des systèmes de radiocommunication à codages et/ou modulations multiples sont connus. Le système GPRS ("General Packet Radio Service") par exemple permet de transmettre, entre une station de base et une station mobile, des blocs de signal modulé pouvant faire l'objet d'une protection variable contre les erreurs de transmission. Le niveau de protection est sélectionné bloc par bloc par le choix d'un schéma de codage CS ("Coding Scheme") parmi quatre schémas CS-1 à CS-4 spécifiés dans la norme européenne ETSI EN 300 909, Digital cellular télécommunications system (Phase 2+); Channel coding (GSM 05.03, version 8.5.1, Release 1999), publiée par l'ETSI ("European Télécommunications Standards Institute") en novembre 2000. Par ailleurs, une seule modulation est disponible dans le système GPRS : la modulation par déplacement de phase à deux états de type GMSK (« Gaussian Minimum Shift Keying »).

Une autre possibilité est de faire varier le niveau de protection par le choix d'une modulation plus ou moins robuste : pour une durée de symbole donnée dans le signal modulé, une modulation binaire, par exemple, procurera plus de protection qu'une modulation quaternaire ou 8-aire.

Une extension du système GPRS nommée EGPRS ("Enhanced GPRS"), utilise, en plus de la GMSK, une modulation par déplacement de phase à huit états (8-PSK, « 8-state Phase Shift Keying »). En EGPRS, neuf schémas de modulation et de codage, appelés MCS-1 à MCS-9, sont prévus. Chacun de ces schémas permet d'offrir un niveau de protection des données plus ou moins robuste et un débit plus ou moins rapide.

Une unité de contrôle, appelée PCU ("Packet Control Unit") dans les systèmes précités, est chargée du choix d'un schéma de modulation et de codage. Ce choix peut être basé sur une optimisation du débit offert pour chaque transmission et doit prendre en compte les conditions de la transmission entre les stations concernées. Ainsi, si la qualité de transmission est médiocre sur les canaux radio utilisés, il sera préférable d'utiliser un schéma robuste pour s'assurer de la transmission des données. En revanche, si les conditions de propagation ne sont pas entachées d'erreurs, il sera judicieux de choisir un schéma privilégiant le débit de transmission des données.

Pour ce faire, l'unité de contrôle peut se baser sur un certain nombre de mesures représentatives de la qualité de transmission, qui lui sont envoyées par les stations de base pour les liens radio montants (station mobile vers station de base), et/ou par les stations mobiles pour les liens radio descendants (station de base vers station mobile).

Toutefois, la norme ne donne pas d'indication quant à la façon de sélectionner un schéma de codage et de modulation parmi les schémas disponibles dans la technologie envisagée (les 9 schémas par exemple en EGPRS) à partir des mesures de qualité des liens radio. Rien n'est suggéré non plus pour le choix de mesures à prendre en compte par l'unité de contrôle.

Enfin, les mesures effectuées peuvent avoir des valeurs très relatives en fonction par exemple de la sensibilité du récepteur qui les réalise, ou bien des caractéristiques de propagation liées à l'environnement (milieux urbain, rural...). Ainsi, des mesures brutes de qualité des liens radio, comme des taux d'erreurs binaires classiquement utilisés dans de tels systèmes, ne seront pas toujours aptes à servir de base à une caractérisation du débit maximum à atteindre. Donc un changement de modulation et/ou de codage ne pourra être décidé, de façon totalement fiable, à partir de simples valeurs de mesure de la qualité de liens radio.

US 6,167,031 divulgue un procédé de sélection d'un schéma de protection. Il enseigne de mesurer des paramètres de qualité d'au moins un lien radio, de calculer des statistiques sur ces paramètres, puis de déduire de ces statistiques des grandeurs de la qualité vue de l'utilisateur relativement à différents schémas de protection. La sélection consiste alors à choisir le schéma de protection pour lequel la qualité vue de l'utilisateur estimée est la meilleure. Cela suppose donc l'établissement d'une correspondance entre des valeurs de paramètres de qualité, par exemple un taux d'erreur binaire, et de grandeurs de la qualité vue de l'utilisateur, par exemple un débit utilisateur. Or une telle correspondance n'est pas toujours fiable et elle est difficile à obtenir.

Un but de la présente invention est d'améliorer le débit des transmissions radio par le choix d'un schéma de protection contre les erreurs de transmission, par exemple un codage des données et/ou une modulation des signaux, adapté aux liens radio utilisés.

Un autre but de l'invention est de définir des mesures radio à prendre en compte par une unité de contrôle pour sélectionner un schéma de protection.

Un autre but encore est d'adapter les éléments de choix d'un schéma de codage aux caractéristiques des transmissions et d'étalonner ces éléments de choix par la prise en compte d'observations caractéristiques du débit utile sur des périodes de temps relativement longues.

L'invention propose ainsi un procédé d'adaptation de liens radio selon la revendication 1.

Le schéma de protection contre les erreurs de transmission peut représenter un codage des données ou bien une modulation des signaux, ou encore un couple codage / modulation.

Les blocs de données échangés sont typiquement constitués d'éléments binaires. Les valeurs de mesure relatives à des erreurs observées dans la réception de symboles transmis peuvent comprendre un taux d'erreur binaire moyenné et/ou un paramètre de variation d'une probabilité d'erreur binaire.

Plusieurs tables de correspondance peuvent être stockées par une unité de contrôle, à raison par exemple, d'une par type de modulation disponible dans le système. Ainsi, en EGPRS, le PCU pourra maintenir une table pour la modulation 8-PSK et une autre pour la modulation GMSK. Il peut gérer une seule table ou bien plusieurs, par exemple, une pour des liens radio montants et une autre pour des liens radio descendants. Il peut aussi gérer des tables pour chaque station de base, c'est-à-dire pour les liens dépendant d'une station de base donnée.

La mise à jour des tables de correspondance est effectuée grâce à une évaluation qui peut être plus lente que les mesures liées aux erreurs sur les symboles transmis et à une analyse de paramètres statistiques relatifs à des erreurs observées dans la réception de blocs transmis. Ceci permet d'étalonner les tables de correspondance en fonction de paramètres plus représentatifs du débit utile que les simples mesures relatives aux erreurs observées dans la réception de symboles transmis. Cela permet aussi, de façon avantageuse, de prendre en compte de manière automatique, certaines spécificités des transmissions, par exemple liées à la qualité des récepteurs ou aux conditions de propagation selon le type d'environnement considéré.

La mise à jour des tables de correspondance peut se faire grâce à l'analyse de répartitions des paramètres statistiques relatifs à des erreurs observées dans la réception de blocs transmis, pour deux schémas de protection, par exemple consécutifs (MCS-n et MCS-(n+1)). Une estimation d'un recouvrement entre les deux répartitions peut alors permettre de modifier la table de correspondance concernée en translatant par exemple la ligne de transition entre les deux schémas dans la table, pour privilégier la présence de l'un des schémas au détriment de l'autre.

L'invention propose également une unité de contrôle pour un système de radiocommunication selon la revendication 9.

D'autres particularités et avantages de la présente invention apparaîtront dans la description ci-après d'exemples de réalisation non limitatifs, en référence aux dessins annexés, dans lesquels :

- la figure 1 est un schéma d'un réseau de type GPRS auquel l'invention peut s'appliquer ;
- la figure 2 est un exemple de schéma synoptique d'une unité de contrôle de paquets d'un tel réseau ;
- les figures 3A et 3B sont des représentations schématiques de tables de correspondance utilisables dans une réalisation de l'invention ;
- la figure 4 est un graphique illustrant des répartitions de taux de blocs erronés entrant en jeu dans un mode de réalisation de l'invention ;
- la figure 5 est une représentation schématique de parties supérieures de tables de correspondance avant et après modification selon un mode de réalisation de l'invention.

L'invention est décrite ci-après dans son application non limitative à des réseaux de type GPRS ou EGPRS. Ces réseaux ont été développés pour permettre la transmission de données en mode paquets dans des réseaux cellulaires de type GSM (« Global System for Mobile communications »).

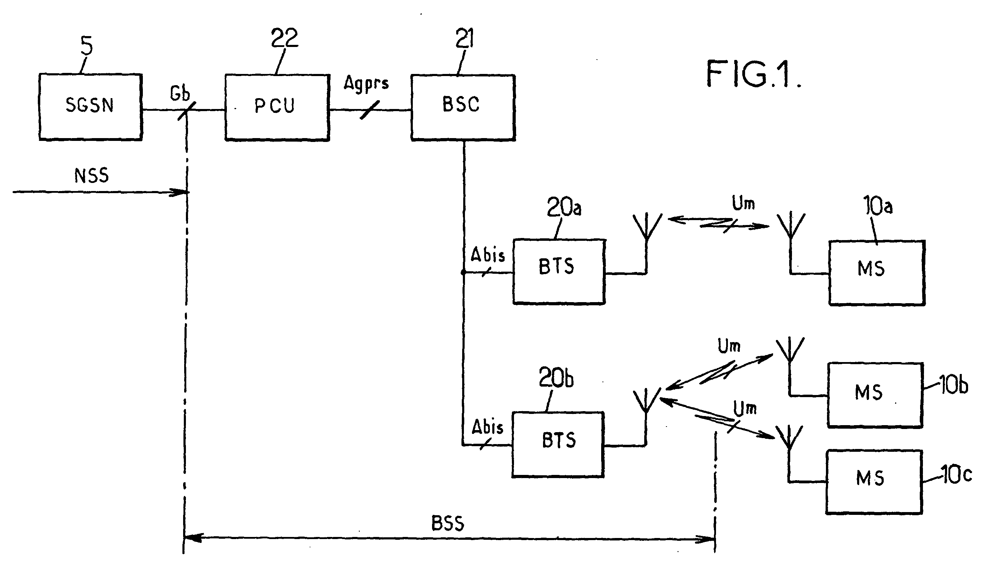

Le réseau GPRS illustré sur la figure 1 est bâti sur une infrastructure GSM, et classiquement divisé en un coeur de réseau, aussi appelé sous-système de réseau et de commutation ou NSS (« Network and Switching Subsystem »), et un réseau d'accès radio également appelé sous-système de stations de base ou BSS (« Base Station Subsystem »).

Pour le service de paquets, les commutateurs du NSS GPRS sont appelés noeuds de support GPRS ou GSN (« GPRS Support Node »). On distingue les SGSN (« Serving GSN ») 5 qui sont reliés au BSS par l'intermédiaire d'une interface appelée Gb, et les GGSN (« Gateway GSN », non représentés) qui servent de passerelle avec des réseaux externes de transmission de paquets, tels que le réseau Internet par exemple.

Une description générale de l'interface radio, appelée Um, entre les stations mobiles (MS) 10a-10b-10c et les stations de base (BTS) 20a-20b du BSS est fournie dans la spécification technique ETSI TS 101 350, « Digital cellular telecommunications system (Phase 2+) ; General Packet Radio Service (GPRS) ; Overall description of the GPRS radio interface ; Stage 2 (GSM 03.64, version 8.5.0, Release 1999), publiée par l'ETSI ("European Télécommunications Standards Institute") en août 2000.

Chaque station de base 20a-20b est supervisée par un contrôleur de stations de base ou BSC (« Base Station Controller ») 21 par l'intermédiaire d'une interface appelée Abis. Pour gérer la transmission de paquets GPRS, le BSS comprend en outre une unité de contrôle de paquets (PCU) 22. La localisation du PCU à l'intérieur du BSS n'est pas normalisée. Dans l'exemple représenté sur la figure 1, le PCU 22 est situé entre le BSC 21, avec lequel il communique à travers une interface appelée Agprs, et le NSS, avec lequel il communique à travers l'interface Gb.

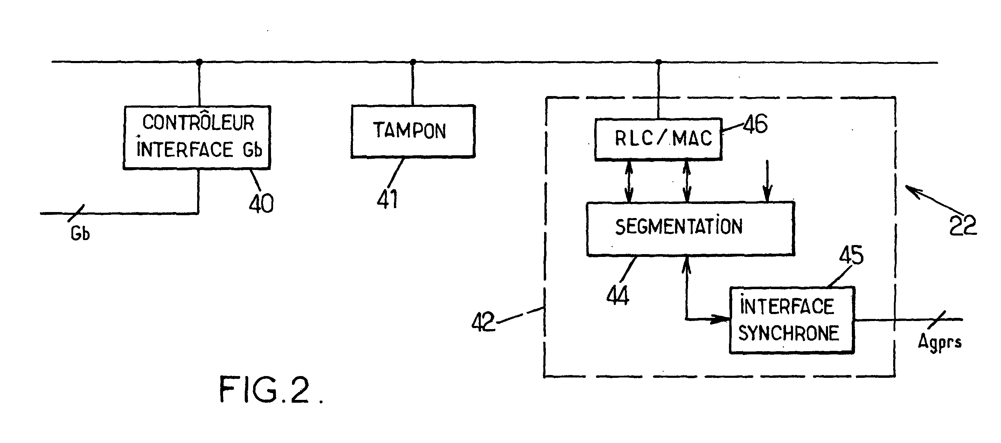

La figure 2 illustre une structure possible d'un PCU 22 situé entre un SGSN 5 et un BSC 21, comme dans l'exemple de la figure 1. La référence 40 désigne le contrôleur d'interface Gb pour la liaison avec le SGSN 5.

L'interface Gb est de type asynchrone. Elle repose sur le protocole de relais de trame (FR, « Frame Relay »), ainsi qu'un protocole appelé BSSGP (« BSS GPRS Protocol ») qui transporte des informations de routage et de qualité de service entre le BSS et le SGSN. Le contrôleur d'interface Gb 40 assure la liaison physique avec le SGSN 5, ainsi que les procédures propres aux protocoles FR et BSSGP.

Les liaisons entre le PCU 22 et les BTS 20a-20b à travers l'interface Agprs sont de type synchrone. En conséquence, les données manipulées par le PCU 22 entre le contrôleur d'interface Gb 40 et le contrôleur d'interface Agprs 42 transitent par une mémoire tampon 41 où sont enregistrées des files d'attente de paquets.

Entre le PCU 22 et les BTS 20a-20b, les informations sont portées par des trames de type TRAU (« Transcoder/Rate Adaptor Unit ») de 320 bits. Ces trames TRAU sont mises en forme et traitées par un module 44 et transmises par l'intermédiaire de circuits d'interface synchrone 45 qui réalisent des sous-voies MIC à 16 kbit/s avec les BTS 20a-20b. Plusieurs canaux (sous-voies) à 16 kbit/s sont multiplexés dans le temps sur l'interface Agprs et commutés par le BSC 21 pour l'acheminement vers les BTS.

Un module 46 du contrôleur d'interface Agprs 42 met en oeuvre les protocoles radio de la couche 2 du modèle ISO, à savoir les protocoles RLC/MAC (« Radio Link Control / Medium Access Control ») décrits dans la norme européenne ETSI EN 301 349, Digital cellular telecommunications system (Phase 2+) ; General Packet Radio Service (GPRS) ; Mobile Station (MS) - Base Station System (BSS) interface ; Radio Link Control/Medium Access Control (RLC/MAC) protocol (GSM 04.60, version 8.3.1, Release 1999), publiée par l'ETSI en octobre 2000.

La sous-couche RLC réalise l'interface avec le protocole de couche supérieure, appelé LLC (« Logical Link Control »). Elle assure la segmentation et le réassemblage des unités de données du protocole LLC (LLC-PDU), qui sont échangées de manière asynchrone sur l'interface Gb. Elle produit des blocs de données RLC auxquels la sous-couche MAC rajoute un en-tête MAC d'un octet.

La sous-couche MAC gère en outre le multiplexage des blocs relevant des différents flux de blocs temporaire (TBF, « Temporary Block Flow ») actifs sur les canaux physiques disponibles, en arbitrant entre les différents utilisateurs mobiles par un mécanisme de planification (« scheduling »).

Le format des blocs RLC/MAC utilisé dans un système EGPRS est décrit dans la norme européenne ETSI EN 301 349 précitée. Neuf schémas de modulation et de codage, appelés MCS-1 à MCS-9, sont prévus. Ils correspondent à des schémas de protection contre les erreurs de transmission. Le schéma utilisé pour un bloc donné, ainsi qu'un schéma de poinçonnage éventuellement appliqué, sont indiqués dans un champ CPS (« Coding and Puncturing Scheme indicator ») de l'en-tête RLC/MAC EGPRS. Chaque bloc RLC contient un nombre d'octets dépendant du schéma de modulation et de codage retenu pour ce bloc.

L'ensemble de l'en-tête RLC/MAC EGPRS fait l'objet d'un codage de canal distinct de celui des données du bloc. Le niveau de protection de cet en-tête contre les erreurs de transmission est plus élevé que celui des données pour assurer une meilleure robustesse des informations de signalisation.

Le Tableau I indique, pour chaque schéma de protection MCS-1 à MCS-9 d'un système EGPRS, le type de modulation utilisé, le rendement du codage utilisé (après poinçonnage) ainsi que le débit utile résultant. Les données de ce tableau sont issues de la spécification technique ETSI TS 101 350 précitée.

TABLEAU I

| Schéma | Modulation | Rendement codage | Débit (kbit/s) |
|--------|------------|------------------|----------------|
| MCS-1 | GMSK | 0,53 | 8,8 |
| MCS-2 | GMSK | 0,66 | 11,2 |
| MCS-3 | GMSK | 0,80 | 14,8 |
| MCS-4 | GMSK | 1 | 17,6 |
| MCS-5 | 8-PSK | 0,37 | 22,4 |
| MCS-6 | 8-PSK | 0,49 | 29,6 |
| MCS-7 | 8-PSK | 0,76 | 44,8 |
| MCS-8 | 8-PSK | 0,92 | 54,4 |
| MCS-9 | 8-PSK | 1 | 59,2 |

Il est à noter qu'en MCS-7, MCS-8 et MCS-9, deux blocs RLC/MAC sont transposés sur un bloc radio de 20 ms. Ainsi, le « bloc de données » à partir duquel peut être formé un bloc radio, et qui doit pouvoir être transmis du PCU à la BTS à raison d'un bloc toutes les 20 ms par canal physique, peut comporter plusieurs blocs RLC/MAC. Il comporte aussi diverses informations de contrôle utiles à la BTS pour la formation du bloc radio, en particulier la désignation du schéma de codage et/ou de modulation à appliquer.

Le schéma de codage et de modulation appliqué est déterminé par le PCU en fonction de mesures de qualité de réception sur le lien radio. Dans l'art antérieur, cela est réalisé selon des mécanismes d'adaptation de lien qui cherchent à atteindre un objectif en termes de taux de blocs erronés afin d'optimiser le débit brut. Le schéma sélectionné est inséré dans la trame TRAU portant le bloc pour être appliqué par la BTS dans le cas d'une liaison descendante. Il est transmis à une MS dans un message PACKET UPLINK ACK/NACK dans le cas d'une liaison montante.

La spécification technique TS 100 911, version 8.13.0, Digital cellular télécommunications system (Phase 2+); Radio Subsystem Link Control (3GPP TS 05.08 Release 1999), publiée en février 2002 par l'organisme 3GPP (3rd Generation Partnership Project) décrit les mesures radio à réaliser par les BTS et les MS sur des signaux reçus. Ces mesures regroupent des niveaux et des indicateurs de qualité des signaux. Parmi ceux-ci, le système EGPRS prévoit le calcul par une MS, sur une liaison descendante et pour chacune des deux modulations (GMSK et 8-PSK), d'indicateurs liés à la probabilité d'erreur binaire (BEP) sur un bloc radio. Parmi ceux-ci, on trouve notamment le MEAN_BEP qui est une moyenne de la probabilité d'erreur binaire sur un bloc radio, et le CV_BEP qui est un coefficient de variation de la probabilité d'erreur binaire sur un bloc radio, soit

$$CV\_BEP = \frac{\sqrt{variance(BEP)}}{MEAN\_BEP}.$$

Les valeurs de MEAN_BEP et CV_BEP sont moyennées en prenant en compte un facteur d'oubli, comme cela est décrit dans la section 10.2.3.2 de la spécification technique TS 100 911 précitée. Elles prennent également en compte l'ensemble des canaux (timeslots) alloués pour la MS considérée. Par la suite, on considère que les notations MEAN_BEP et CV_BEP s'appliquent aux valeurs moyennées.

Bien que cela ne soit pas explicitement prévu par la norme, on envisage, dans la présente invention, qu'une BTS calcule le même type d'indicateurs MEAN_BEP et CV_BEP pour des liaisons radio montantes. Les MEAN_BEP sont codés sur des valeurs comprises entre 0 et 31 et les CV_BEP sur des valeurs comprises entre 0 et 7. On peut aussi noter que le codage des MEAN_BEP diffère selon qu'ils sont évalués sur l'une ou l'autre des deux modulations disponibles dans le système EGPRS.

Les mesures effectuées par la MS (par exemple la MS 10a de la figure 1) sont remontées au PCU 22 dans un message PACKET DOWNLINK ACK/NACK, comme spécifié au paragraphe 11.2.6a de la norme EN 301 349 précitée. Les mesures effectuées par la BTS (par exemple la BTS 20a de la figure 1) sont, quant à elles, transmises au PCU 22 dans une trame TRAU.

Le PCU 22 a la responsabilité de la sélection d'un schéma de codage et de modulation pour chaque lien radio, sur la base des mesures qui lui ont été remontées. Il dispose de tables qui donnent une correspondance entre un couple (MEAN_BEP, CV_BEP) et un des schémas MCS-1 à MCS-9. Ces tables contiennent donc 256 (= 32 MEAN_BEP * 8 CV_BEP) valeurs de MCS. Elles peuvent s'appliquer à des liens montants ou à des liens descendants. Elles peuvent aussi concerner toutes les BTS (20a-20b), c'est-à-dire tous les liens radio, soit montants, soit descendants, sous la dépendance des BTS, ou bien une BTS donnée (20a) sous la responsabilité du PCU 22. Elles peuvent contenir des valeurs prédéterminées éventuellement dépendantes de certains critères comme un modèle de propagation (urbain, rural...). Le PCU maintient de préférence deux tables pour une BTS, à savoir une pour chaque modulation.

De façon avantageuse, les valeurs prédéterminées avec lesquelles les tables sont initialisées, sont issues de simulations de sorte que le schéma de codage et de modulation affecté à un couple (MEAN_BEP, CV_BEP) soit celui qui permet d'offrir le meilleur débit théorique possible sur le lien radio montant ou descendant considéré. Il est envisageable que certains schémas de protection ne soient jamais recommandés quelles que soient les valeurs de MEAN_BEP et CV_BEP mesurées. Dans ce cas, les schémas correspondants seront absents des tables de correspondance concernées. En outre, des valeurs de MCS correspondant à une modulation 8-PSK peuvent être indiquées pour un couple (MEAN_BEP, CV_BEP) calculé avec la modulation GMSK, et inversement. Dans un tel cas, la modulation utilisée pour la communication sera modifiée sur le lien concerné lors du changement de MCS commandé par le PCU.

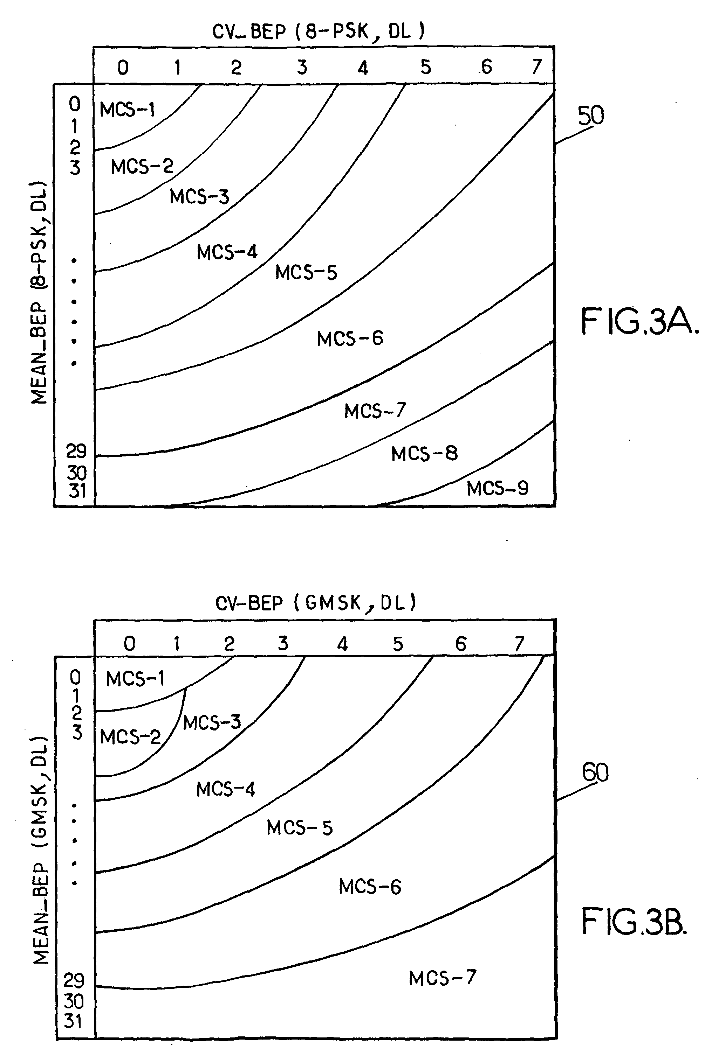

Des exemples schématisés de telles tables de correspondance sont présentés sur les figures 3A et 3B. La table 50 représentée sur la figure 3A s'applique à une liaison radio descendante (DL) utilisant la modulation 8-PSK, tandis que la table 60 représentée sur la figure 3B s'applique à la même liaison radio descendante, mais lorsqu'elle utilise la modulation GMSK.

Par ailleurs, le PCU est capable d'évaluer un taux d'erreur de blocs sur un lien radio ou un ensemble de liens radio montants ou descendants. Ceci peut être réalisé à l'aide du mécanisme de requête automatique de répétition (ARQ, "Automatic Repeat reQuest") mis en oeuvre dans la couche RLC/MAC. Pour un ensemble des blocs RLC transmis, il peut ainsi évaluer la proportion de blocs non reçus ou mal reçus par la station destinataire. Pour les blocs montants, il lui suffit de se fonder sur les informations d'acquittement qu'il élabore afin de les retourner au mobile dans les messages PACKET UPLINK ACK/NACK. Pour les blocs descendants, ces informations d'acquittement lui parviennent dans les messages PACKET DOWNLINK ACK/NACK. L'indicateur correspondant à la proportion de blocs non reçus ou mal reçus est communément appelé BLER ("Block Error Rate").

Le BLER est fortement corrélé à la notion de débit. En effet, le débit se déduit du BLER par la formule simplifiée : $(1-BLER) \times débit_{max}$, où $débit_{max}$ désigne le débit maximum théorique sur le ou les liens radio considérés, correspondant au débit indiqué dans la dernière colonne du Tableau I.

La prise en compte du BLER dans les critères de choix d'un MCS pour un lien radio permet d'optimiser le débit de façon beaucoup plus fiable que d'après une simple analyse du couple (MEAN_BEP, CV_BEP). En effet, les mesures liées au BEP sont effectuées au niveau binaire et dépendent de nombreux paramètres, comme la qualité du récepteur et les caractéristiques de propagation dans un environnement donné. La notion de blocs erronés est beaucoup plus concrète et plus fiable dans la mesure où elle est directement liée aux éléments de données transmis. Si un bloc de données est erroné, il doit être retransmis sous peine de dégrader la qualité de la communication.

On considère désormais, de façon non limitative, que le PCU maintient des tables de correspondance et calcule des valeurs de BLER à l'échelle de chaque BTS. Si l'on revient à l'exemple de la figure 1, cela signifie notamment que le PCU 22 calcule des valeurs de BLER pour tous les liens radio montants sous la responsabilité de la BTS 20b représentée sur la figure 1, c'est-à-dire pour les blocs émis par les MS 10a et 10b en communication avec la BTS 20b. En outre, le PCU 22 calcule des valeurs de BLER pour tous les liens descendants sous la responsabilité de la BTS 20b, c'est-à-dire pour tous les blocs émis par la BTS 20b.

Plus généralement, et selon un mode de réalisation avantageux de l'invention, le PCU 22 calcule des valeurs de BLER montant et descendant pour chaque ensemble de liens radio ayant un MCS donné activé. On obtient ainsi, au niveau du PCU 22, un ensemble de valeurs de BLER pour chaque MCS actif dans le sens montant, et un autre pour chaque MCS actif dans le sens descendant. De façon avantageuse, des valeurs de BLER seront calculées pour les mêmes liens radio que ceux pour lesquels une table de correspondance est stockée et maintenue par le PCU (c'est-à-dire, par exemple, pour tous les liens sous la dépendance d'une BTS dans le cas envisagé ci-dessus).

On se place ici, de façon non restrictive, dans le sens descendant. Le PCU 22 effectue une analyse statistique des valeurs de BLER calculées régulièrement pour chaque MCS activé sur les liens radio descendants entre la BTS 20b et les MS 10b et 10c respectivement. Considérons par exemple que des MCS adjacents soient utilisés : par exemple, le lien avec la MS 10b utilise MCS-1 et la MS 10c utilise MCS-2. Le PCU 22 dispose de valeurs de BLER pour les blocs émis par la BTS 20b, pour les MCS-1 et MCS-2, et il les exploite de manière à en déduire des paramètres statistiques. Par exemple, il établit une répartition statistique des valeurs de BLER estimées, c'est-à-dire qu'il calcule l'occurrence de chaque valeur de BLER estimée.

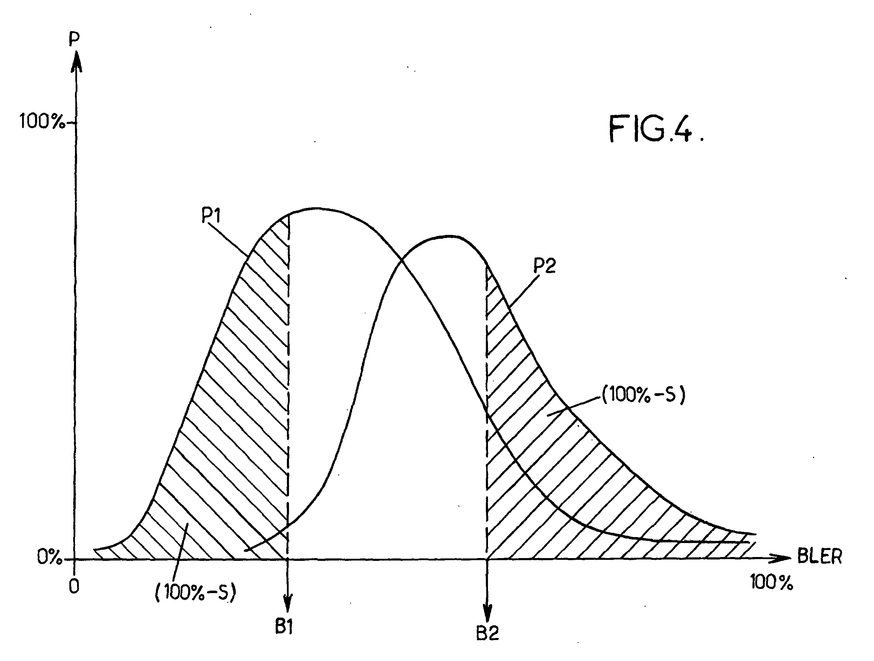

La figure 4 illustre des exemples de courbes statistiques établies par le PCU 22 à partir d'un nombre défini d'échantillons de mesures de BLER pour les MCS-1 (P1) et MCS-2 (P2). Ces courbes traduisent donc, pour un MCS-n donné (avec n = 1 ou 2) la probabilité d'occurrence des différentes valeurs de BLER. Le MCS-1 étant plus robuste face aux erreurs de transmissions, il est logique que les valeurs de BLER mesurées sur le lien descendant entre la BTS 20b et la MS 10b soient globalement plus faibles que celles mesurées pour le MCS-2.

Le PCU 22 cherche ensuite à définir une valeur de seuil qui détermine le changement de MCS. On fait, à titre d'exemple, le choix de définir la transition entre deux MCS comme suit : l'endroit, dans la table de correspondance, où le MCS offrant le plus haut débit est recommandé pour toutes les valeurs, ou à défaut un maximum de valeurs, de CV_BEP pour un MEAN_BEP minimum. Considérons la valeur de seuil caractérisant la transition entre les MCS-1 et MCS-2. Elle est homogène avec une valeur de BEP, telle que définie précédemment.

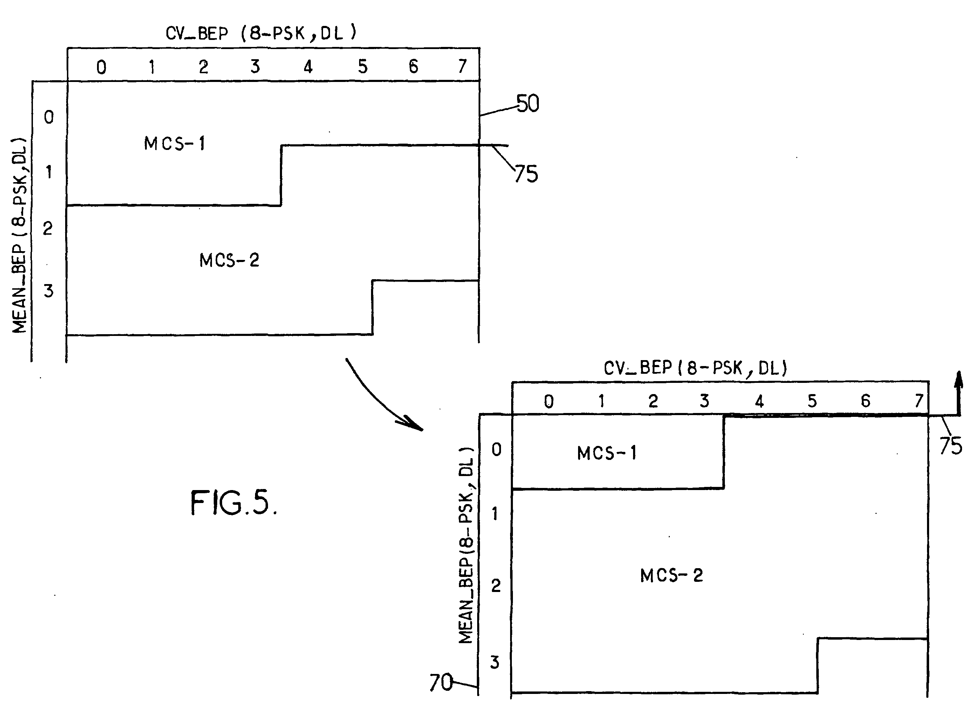

Par exemple, la transition entre MCS-1 et MCS-2 utilisée par le PCU 22 dans sa table de correspondance 50, représentée sur la figure 5, apparaît pour un MEAN_BEP égal à 2 (où le MCS-2 est recommandé pour toutes les valeurs de MEAN_BEP et CV-BEP). La valeur de seuil correspondant à cette transition est comprise entre 20,9% ($=10^{-0,68}$) et 22,9% ($=10^{-0,64}$) environ, conformément au codage du MEAN_BEP utilisé pour une modulation 8-PSK décrit dans la spécification technique TS 100 911 précitée.

Pour mettre à jour une telle valeur de seuil T1 caractérisant la transition entre les MCS-1 et MCS-2 par exemple, le PCU peut par exemple calculer une valeur moyenne de BLER (B1) au-dessus de laquelle la proportion d'échantillons de BLER pour le MCS-1 est égale à un pourcentage fixé S. Parallèlement, le PCU définit à partir de la répartition des échantillons de valeurs de BLER pour le MCS-2, une seconde valeur moyenne de BLER (B2) en-dessous de laquelle se trouvent S % des échantillons mesurés. Les parties hachurées sur la figure 4 montrent les délimitations obtenues grâce aux valeurs B1 et B2.

Le PCU 22 déduit des valeurs de BLER B1 et B2, deux valeurs de débits D1 et D2 respectifs. En effet, d'après les débits maximums théoriques offerts par les MCS-1 et MCS-2, on a :

$$D1 = (100\% - B1) \times 8,8 \text{ (kbit/s)}$$

$$D2 = (100\% - B1) \times 11,2 \text{ (kbit/s)}$$

Le PCU 22 calcule alors le paramètre C = D1/D2 - 1, représentatif d'une différence relative entre les débits ainsi calculés. Le paramètre C traduit aussi le recouvrement entre les portions des répartitions telles qu'illustrées sur la figure 4. Le PCU compare ensuite le paramètre C à un seuil X1. La valeur de ce dernier peut par exemple être obtenue grâce à des simulations. Lorsque C a une valeur supérieure au seuil X1, ce qui traduit un fort recouvrement des répartitions de BLER pour les MCS-1 et MCS-2, la valeur de seuil T1 peut être diminuée d'une valeur fixe δ. En effet, dans un tel cas, les débits réels offerts par le MCS-1 étant proches voire meilleurs que ceux offerts par le MCS-2, il est légitime de vouloir accroître l'utilisation du MCS-1. A l'inverse, lorsque C est inférieur à -X1, ce qui traduit un faible recouvrement des répartitions de BLER pour les MCS-1 et MCS-2, T1 peut être augmentée d'une valeur fixe, éventuellement égale à δ, de manière à favoriser l'utilisation du MCS-2 pour des valeurs de BEP fortes et accroître ainsi le débit offert.

La valeur de seuil T1 ainsi mise à jour correspond à une nouvelle valeur de transition dans la table de correspondance concernée au niveau du PCU 22. Prenons par exemple le cas d'une diminution de T1 consécutive à l'analyse des répartitions des BLER pour les MCS-1 et MCS-2 présentant un faible recouvrement. Si la valeur de T1 passe à 24% par exemple, elle est alors dans la fourchette de valeurs couverte par MEAN_BEP=1 (de 22,9 à 25,1% environ). Cela signifie que la transition entre l'utilisation de MCS-1 et MCS-2 peut être faite lorsque des valeurs de MEAN_BEP=1 sont calculées.

La figure 5 illustre ce principe. Elle représente la partie supérieure de la table de correspondance 50, déjà présentée. La transition entre MCS-1 et MCS-2 se fait pour MEAN_BEP=2, selon la définition adoptée plus haut. Après calcul des répartitions de BLER, le PCU 22 détermine, comme décrit ci-dessus, une nouvelle valeur de seuil entre MCS-1 et MCS-2, de l'ordre de 24%. Conformément au codage des MEAN_BEP, la transition entre MCS-1 et MCS-2 doit alors se faire pour MEAN_BEP=1. A cette fin, le PCU 22 modifie la table 50 pour obtenir une nouvelle table 70 dont chaque transition entre MCS est conservée par rapport à la table 50, à l'exception de la transition entre MCS-1 et MCS-2 qui se fait désormais pour MEAN_BEP=1. Cela correspond donc à une simple translation de ligne dans la table de correspondance concernée, comme le montre la figure 5. La ligne 75 représentée sur la figure 5 symbolise la transition entre le MCS-1 et MCS-2. Elle est donc translatée telle quelle, vers le haut, lors de la mise en oeuvre de la table de correspondance 70, réduisant ainsi l'utilisation du schéma MCS-1 au profit du MCS-2.

A l'issue de cette modification, le PCU 22 utilisera la nouvelle table 70 pour déterminer les MCS à affecter aux différents liens radio auxquels la table de correspondance s'applique, c'est-à-dire, dans notre exemple, les liens radio descendants entre la BTS 20b et les MS 10b et 10c.

Bien sûr, bien d'autres méthodes de mise à jour des tables de correspondance peuvent être réalisées à partir de valeurs de BLER. On peut par exemple envisager que le PCU estime simplement, pour un ensemble de liens radio et pour chaque MCS utilisé, une valeur moyenne de BLER qu'il met à jour à nouvelle estimation de BLER ou à l'issue d'une période de temps. La différence entre les moyennes de BLER estimées pour deux MCS, par exemple MCS-1 et MCS-2, peut alors servir de base comme précédemment à la modification de la valeur de transition entre les deux MCS.

**Revendications**

**1.** Procédé d'adaptation de liens radio supportant des signaux, représentant des blocs de données composés de symboles, transmis entre des stations de base (20a,20b) et des stations mobiles (10a, 10b, 10c) en appliquant un schéma de protection contre les erreurs de transmission sélectionné parmi plusieurs schémas de protection déterminés, dans lequel procédé certaines au moins desdites stations communiquent à une unité de contrôle (22) des valeurs de mesure relatives à des erreurs observées dans la réception de symboles transmis, et l'unité de contrôle consulte au moins une table de correspondance (50,60) pour sélectionner de manière adaptative le schéma de protection appliqué à chaque lien radio en fonction des valeurs de mesure communiquées relativement audit lien, le procédé comprenant les étapes suivantes:

- déterminer, pour au moins deux des schémas de protection, une répartition (P1, P2) des valeurs de paramètres statistiques relatifs à des erreurs observées dans la réception de blocs transmis en appliquant le schéma de protection respectif, en fonction de leur occurrence ;

- calculer une valeur d'un paramètre représentatif d'un recouvrement entre les répartitions pour les deux schémas de protection ; et

- ajuster la présence des deux schémas de protection l'un par rapport à l'autre dans la table de correspondance en fonction de ladite valeur de paramètre représentatif du recouvrement entre les répartitions.

2. Procédé selon la revendication 1, dans lequel les symboles sont constitués d'éléments binaires et dans lequel lesdites valeurs de mesure relatives à des erreurs observées dans la réception de symboles transmis comprennent des valeurs d'un taux d'erreur binaire moyenné (MEAN_BEP).

3. Procédé selon la revendication 1 ou 2, dans lequel les symboles sont constitués d'éléments binaires et dans lequel lesdites valeurs de mesure relatives à des erreurs observées dans la réception de symboles transmis comprennent des valeurs d'un paramètre de variation d'une probabilité d'erreur binaire (CV_BEP).

4. Procédé selon l'une quelconque des revendications précédentes, dans lequel lesdits schémas de protection contre les erreurs de transmission comprennent un codage des blocs de données, sélectionné parmi plusieurs codages correcteurs d'erreurs possibles.

5. Procédé selon l'une quelconque des revendications précédentes, dans lequel lesdits schémas de protection contre les erreurs de transmission comprennent une modulation des signaux transmis, sélectionnée parmi plusieurs modulations possibles.

6. Procédé selon la revendication 5, dans lequel certaines au moins desdites stations (20a,20b) communiquent à l'unité de contrôle (22) des valeurs de mesure relatives à des erreurs observées dans la réception de symboles transmis pour chacune des modulations, et dans lequel l'unité de contrôle stocke au moins une table de correspondance (50,60) pour chaque modulation.

7. Procédé selon l'une quelconque des revendications précédentes, dans lequel lesdits paramètres statistiques sont estimés pour un ensemble de liens radio entre une station de base et un groupe de stations mobiles.

8. Procédé selon l'une quelconque des revendications précédentes, dans lequel les schémas de protection sont classés par ordre croissant en fonction d'un débit théorique offert et dans lequel lesdits deux schémas de protection sont consécutifs dans le classement.

9. Unité de contrôle (22) pour un système de radiocommunication procurant des liens radio supportant des signaux, représentant des blocs de données composés de symboles, transmis entre des stations de base (20a,20b) et des stations mobiles (10a,10b,10c) en appliquant un schéma de protection contre les erreurs de transmission sélectionné parmi plusieurs schémas de protection déterminés, l'unité de contrôle comprenant:

- des moyens de réception, depuis certaines au moins desdites stations, de valeurs de mesure relatives à des erreurs observées dans la réception de symboles transmis;
- des moyens de consultation d'au moins une table de correspondance (50,60) pour sélectionner de manière adaptative le schéma de protection appliqué à chaque lien radio en fonction des valeurs de mesure reçues relativement audit lien;
- des moyens pour déterminer, pour au moins deux des schémas de protection, une répartition (P1,P2) des valeurs de paramètres statistiques relatifs à des erreurs observées dans la réception de blocs transmis en appliquant le schéma de protection respectif, en fonction de leur occurrence ;
- des moyens pour calculer une valeur d'un paramètre représentatif d'un recouvrement entre les répartitions pour les deux schémas de protection ; et
- des moyens pour ajuster la présence des deux schémas de protection l'un par rapport à l'autre dans la table de correspondance en fonction de ladite valeur de paramètre représentatif du recouvrement entre les répartitions.

10. Unité de contrôle selon la revendication 9, dans laquelle les symboles sont constitués d'éléments binaires et dans laquelle lesdites valeurs de mesure relatives à des erreurs observées dans la réception de symboles transmis comprennent des valeurs d'un taux d'erreur binaire moyenné (MEAN_BEP).

11. Unité de contrôle selon la revendication 9 ou 10, dans laquelle les symboles sont constitués d'éléments binaires et dans laquelle lesdites valeurs de mesure relatives à des erreurs observées dans la réception de symboles transmis comprennent des valeurs d'un paramètre de variation d'une probabilité d'erreur binaire (CV_BEP).

**12.** Unité de contrôle selon l'une quelconque des revendications 9 à 11, dans laquelle lesdits schémas de protection contre les erreurs de transmission comprennent un codage des blocs de données, sélectionné parmi plusieurs codages correcteurs d'erreurs possibles.

**13.** Unité de contrôle selon l'une quelconque des revendications 9 à 12, dans laquelle lesdits schémas de protection contre les erreurs de transmission comprennent une modulation des signaux transmis, sélectionnée parmi plusieurs modulations possibles.

**14.** Unité de contrôle selon la revendication 13, dans laquelle les moyens de réception des valeurs de mesure sont agencés pour recevoir des valeurs de mesure relatives à des erreurs observées dans la réception de symboles transmis pour chacune des modulations, au moins une table de correspondance (50,60) étant stockée pour chaque modulation.

**15.** Unité de contrôle selon l'une quelconque des revendications 9 à 14, dans laquelle les moyens d'estimation des paramètres statistiques sont agencés pour estimer des paramètres statistiques pour un ensemble de liens radio entre une station de base et un groupe de stations mobiles.

**16.** Unité de contrôle selon l'une quelconque des revendications 9 à 15, dans laquelle les schémas de protection sont classés par ordre croissant en fonction d'un débit théorique offert et dans laquelle lesdits deux schémas de protection sont consécutifs dans le classement.

**Patentansprüche**

**1.** Verfahren zur Anpassung von Funkverbindungen, die Signale tragen und Datenblöcke, die sich aus Symbolen zusammensetzen, darstellen, die zwischen Basisstationen (20a, 20b) und Mobilstationen (10a, 10b, 10c) übertragen werden, wobei ein Schutzschema gegen die Übertragungsfehler angewandt wird, das unter mehreren bestimmten Schutzschemata ausgewählt wird, bei welchem Verfahren zumindest gewisse der Stationen einer Kontrolleinheit (22) Messwerte zu beim Empfang von übertragenen Symbolen beobachteten Fehlern übermitteln und die Kontrolleinheit mindestens eine Entsprechungstabelle (50, 60) konsultiert, um auf anpassende Weise das Schutzschema auszuwählen, das an jeder Funkverbindung in Abhängigkeit von den für die Verbindung übermittelten Messwerten angewandt wird, wobei das Verfahren die folgenden Schritte umfasst:

für mindestens zwei der Schutzschemata Bestimmung einer Verteilung (P1, P2) der statistischen Parameterwerte hinsichtlich der beim Empfang von übertragenen Blöcken beobachteten Fehler, wobei das jeweilige Schutzschema in Abhängigkeit von ihrem Vorkommen angewandt wird;

Berechnung eines Wertes eines für eine Abdeckung zwischen den Verteilungen repräsentativen Parameters für die beiden Schutzschemata; und

Anpassung des Vorhandenseins der beiden Schutzschemata aneinander in der Entsprechungstabelle in Abhängigkeit von dem Wert des für die Abdeckung zwischen den Verteilungen repräsentativen Parameters.

**2.** Verfahren nach Anspruch 1, bei dem die Symbole von Binärelementen gebildet sind, und bei dem die Messwerte hinsichtlich der beim Empfang von übertragenen Symbolen beobachteten Fehlern Werte mit einer durchschnittlichen Binärfehlerrate (MEAN_BEP) umfassen.

**3.** Verfahren nach Anspruch 1 oder 2, bei dem die Symbole von Binärelementen gebildet sind, und bei dem die Messwerte hinsichtlich der beim Empfang von übertragenen Symbolen beobachteten Fehlern Werte eines Variationsparameters einer Binärfehlerwahrscheinlichkeit (CV_BEP) umfassen.

**4.** Verfahren nach einem der vorhergehenden Ansprüche, bei dem die Schutzschemata gegen die Übertragungsfehler eine Codierung der Datenblöcke umfassen, die unter mehreren möglichen Fehlerkorrekturcodierungen ausgewählt wird.

**5.** Verfahren nach einem der vorhergehenden Ansprüche, bei dem die Schutzschemata gegen die Übertragungsfehler eine Modulation der übertragenen Daten umfassen, die unter mehreren möglichen Modulationen ausgewählt wird.

**6.** Verfahren nach Anspruch 5, bei dem mindestens gewisse der Stationen (20a, 20b) an die Kontrolleinheit (22) Messwerte hinsichtlich beim Empfang von übertragenen Symbolen beobachteten Fehlern für jede der Modulationen übermitteln, und bei dem die Kontrolleinheit mindestens eine Entsprechungstabelle (50, 60) für jede Modulation speichert.

**7.** Verfahren nach einem der vorhergehenden Ansprüche, bei dem die statistischen Parameter für eine Gesamtheit von Funkverbindungen zwischen einer Basisstation und einer Gruppe von Mobilstationen geschätzt werden.

**8.** Verfahren nach einem der vorhergehenden Ansprüche, bei dem die Schutzschemata in ansteigender Reihenfolge in Abhängigkeit von einer theoretischen angebotenen Menge eingeteilt sind, und bei dem die beiden Schutzschemata in der Einteilung aufeinander folgen.

**9.** Kontrolleinheit (22) für ein Funkkommunikationssystem, die Funkverbindungen liefert, die Signale tragen, die Datenblöcke, die sich aus Symbolen zusammensetzen, darstellen, die zwischen Basisstationen (20a, 20b) und Mobilstationen (10a, 10b, 10c) übertragen werden, wobei ein Schutzschema gegen die Übertragungsfehler angewandt wird, das unter mehreren bestimmten Schutzschemata ausgewählt wird, wobei die Kontrolleinheit umfasst:

Mittel zum Empfang von Messwerten zu beim Empfang von übertragenen Symbolen beobachteten Fehlern von mindestens gewissen der Stationen;

Mittel zur Konsultation von mindestens einer Entsprechungstabelle (50, 60), um auf anpassende Weise das an jeder Funkverbindung angewandte Schutzschema in Abhängigkeit von den zu der Verbindung empfangenen Messwerten auszuwählen;

Mittel, um für mindestens zwei der Schutzschemata eine Verteilung (P1, P2) der statistischen Parameterwerte zu beim Empfang von übertragenen Datenblöcken beobachteten Fehlern zu bestimmen, wobei das jeweilige Schutzschema in Abhängigkeit von ihrem Vorkommen angewandt wird;

Mittel, um einen Wert eines für eine Abdeckung zwischen den Verteilungen repräsentativen Werts für die beiden Schutzschemata zu berechnen;

Mittel, um das Vorhandensein der beiden Schutzschemata in Bezug zueinander in der Entsprechungstabelle in Abhängigkeit vom für die Abdeckung zwischen den Verteilungen repräsentativen Parameterwert anzupassen.

**10.** Kontrolleinheit nach Anspruch 9, bei der die Symbole von Binärelementen gebildet sind, und bei der die Messwerte zu den beim Empfang von übertragenen Symbolen beobachteten Fehlern Werte mit einer durchschnittlichen Binärfehlerrate (MEAN_BEP) umfassen.

**11.** Kontrolleinheit nach Anspruch 9 oder 10, bei der die Symbole von Binärelementen gebildet sind, und bei der die Messwerte hinsichtlich der beim Empfang von übertragenen Symbolen beobachteten Fehlern Werte eines Variationsparameters einer Binärfehlerwahrscheinlichkeit (CV_BEP) umfassen.

**12.** Kontrolleinheit nach einem der Ansprüche 9 bis 11, bei der die Schutzschemata gegen die Übertragungsfehler eine Codierung der Datenblöcke umfassen, die unter mehreren möglichen Fehlerkorrekturcodierungen ausgewählt wird.

**13.** Kontrolleinheit nach einem der Ansprüche 9 bis 12, bei der die Schutzschemata gegen die Übertragungsfehler eine Modulation der übertragenen Daten umfassen, die unter mehreren möglichen Modulationen ausgewählt wird.

**14.** Kontrolleinheit nach Anspruch 13, bei der die Empfangsmittel der Messwerte derart angeordnet sind, dass sie Messwerte hinsichtlich beim Empfang von übertragenen Symbolen beobachteten Fehlern für jede der Modulationen empfangen, wobei mindestens eine Entsprechungstabelle (50, 60) für jede Modulation gespeichert ist.

**15.** Kontrolleinheit nach einem der Ansprüche 9 bis 15, bei der die Mittel zum Schätzen der statistischen Parameter derart vorgesehen sind, dass sie für eine Gesamtheit von Funkverbindungen zwischen einer Basisstation und einer Gruppe von Mobilstationen statistische Parameter schätzen.

16. Kontrolleinheit nach einem der Ansprüche 9 bis 15, bei der die Schutzschemata in ansteigender Reihenfolge in Abhängigkeit von einer theoretischen angebotenen Menge eingeteilt sind, und bei dem die beiden Schutzschemata in der Einteilung aufeinander folgen.

**Claims**

1. A method for adapting radio links supporting signals, representing data blocks composed of symbols, transmitted between base stations (20a, 20b) and mobile stations (10a, 10b, 10c) by applying a transmission errors protection scheme selected from a plurality of specified protection schemes, in which method at least some of said stations communicate to a control unit (22) measurement values relating to errors observed in the reception of symbols transmitted, and the control unit consults at least one lookup table (50, 60) to adaptively select the protection scheme applied to each radio link as a function of the measurement values communicated in relation to said link, the method comprising the steps of:

   - determining, for at least two of the protection schemes, a distribution (P1, P2) of the values of the statistical parameters relating to errors observed in the reception of blocks transmitted by applying the respective protection scheme, as a function of their occurrence;
   - calculating a value of a parameter representative of an overlap between the distributions for the two protection schemes; and
   - tailoring the presence of the two protection schemes with respect to one another in the lookup table as a function of said value of the parameter representative of the overlap between the distributions.

2. The method as claimed in claim 1, wherein the symbols consist of bits and wherein said measurement values relating to errors observed in the reception of symbols transmitted comprise values of an averaged bit error rate (MEAN_BEP).

3. The method as claimed in claim 1 or 2, wherein the symbols consist of bits and wherein said measurement values relating to errors observed in the reception of symbols transmitted comprise values of a bit error probability variation parameter (CV_BEP).

4. The method as claimed in one of the preceding claims, wherein said transmission errors protection schemes comprise a coding of the data blocks, selected from a plurality of possible error correcting codings.

5. The method as claimed in any one of the preceding claims, wherein said transmission errors protection schemes comprise a modulation of the signals transmitted, said modulation being selected from a plurality of possible modulations.

6. The method as claimed in claim 5, wherein at least some of said stations (20a, 20b) communicate to the control unit (22) measurement values relating to errors observed in the reception of symbols transmitted for each of the modulations, and wherein the control unit stores at least one lookup table (50, 60) for each modulation.

7. The method as claimed in any one of the preceding claims, wherein said statistical parameters are estimated for a set of radio links between a base station and a group of mobile stations.

8. The method as claimed in any one of the preceding claims, wherein the protection schemes are ranked by ascending order as a function of a theoretical throughput offered and wherein said two protection schemes are consecutive in the ranking.

9. A control unit (22) for a radio communication system affording radio links supporting signals, representing data blocks composed of symbols, transmitted between base stations (20a, 20b) and mobile stations (10a, 10b, 10c) by applying a transmission errors protection scheme selected from a plurality of specified protection schemes, the control unit comprising:

   - means for receiving, from certain at least of said stations, measurement values relating to errors observed in the reception of symbols transmitted;

   - means for consulting at least one lookup table (50, 60) for adaptively selecting the protection scheme applied to each radio link as a function of the measurement values received in relation to said link;

- means for determining, for at least two of the protection schemes, a distribution (P1, P2) of the values of the statistical parameters relating to errors observed in the reception of blocks transmitted by applying the respective protection scheme, as a function of their occurrence;

- means for calculating a value of a parameter representative of an overlap between the distributions for the two protection schemes; and

- means for tailoring the presence of the two protection schemes with respect to one another in the lookup table as a function of said value of the parameter representative of the overlap between the distributions.

10. The control unit as claimed in claim 9, wherein the symbols consist of bits and wherein said measurement values relating to errors observed in the reception of symbols transmitted comprise values of an averaged bit error rate (MEAN_BEP).

11. The control unit as claimed in claim 9 or 10, wherein the symbols consist of bits and wherein said measurement values relating to errors observed in the reception of symbols transmitted comprise values of a bit error probability variation parameter (CV_BEP).

12. The control unit as claimed in any one of claims 9 to 11, wherein said transmission errors protection schemes comprise a coding of the data blocks, selected from a plurality of possible error correcting codings.

13. The control unit as claimed in any one of claims 9 to 12, wherein said transmission errors protection schemes comprise a modulation of the signals transmitted, said modulation being selected from a plurality of possible modulations.

14. The control unit as claimed in claim 13, wherein the means for receiving measurement values are arranged to receive measurement values relating to errors observed in the reception of symbols transmitted for each of the modulations, at least one lookup table (50, 60) being stored for each modulation.

15. The control unit as claimed in any one of claims 9 to 14, wherein the means for estimating the statistical parameters are arranged to estimate statistical parameters for a set of radio links between a base station and a group of mobile stations.

16. The control unit as claimed in any one of claims 9 to 15, wherein the protection schemes are ranked by ascending order as a function of a theoretical throughput offered and wherein said two protection schemes are consecutive in the ranking.

FIG.1.

EP 1 370 020 B1

CONTRÔLEUR
INTERFACE Gb

40

Gb

TAMPON

41

RLC/MAC 46

SEGMENTATION

44

42

INTERFACE
SYNCHRONE

45

Agprs

22

FIG.2.

FIG.3A.

FIG.3B.

FIG.4.

EP 1 370 020 B1

FIG.5.